# EUROPEAN PATENT SPECIFICATION

(11) **EP 1 353 506 B1**
(45) Date of publication and mention of the grant of the patent: **28.01.2004**
(21) Application number: 02290877.6
(22) Date of filing: 08.04.2002
(51) Int. Cl.: H04N 5/775

(54) **Networking audio/video device**
In einem Netzwerk arbeitende Audi/Video-Anlage
Dispositif audio/vidéo fonctionnant en réseau

(43) Date of publication of application: 15.10.2003
(73) Proprietor: Thomson Licensing S.A., 92100 Boulogne-Billancourt (FR)
(72) Inventor: Dumont, Frank, 269564 Singapore (SG); Barron, Steven Anthony, 738207 Singapore (SG)
(74) Representative: Bonnans, Arnaud

(56) References cited:
- EP-A- 0 565 170
- EP-A- 0 975 161
- US-B1- 6 236 694

## Description

The present invention relates to an audio/video (AV) device capable of operating in a network together with at least two other AV devices. Such a network may *e.g.* be formed of a television set (TV) and at least two peripheral devices such as a video cassette recorder (VCR), a personal video recorder (PVR), *etc*, see e.g. EP-A-0 565 170.

TVs and video recorders as currently marketed in Europe are equipped with a so-called AV-LINK feature. AV-LINK is a type of serial data communication between a TV and a video recorder connected to it which supports functions such as program mapping from the TV tuner to the video recorder tuner, timer download or emergency recording.

The program map of a tuner is the set of receiving frequencies assigned to each of the various channels than can be selected by a user, e.g. by pressing one of the program keys of a TV remote control. Downloading a program map from a TV means that the TV can automatically transfer all or some of these frequencies to a video recorder or any other device connected to it by AV-LINK if the program map of the TV has been changed or if such a download has been requested by the device.

Emergency recording means that a VCR can immediately start recording a program that is currently being viewed on a TV connected to it by merely pressing an emergency button on a remote control of the TV or video recorder. If this button is pressed, the TV will issue an instruction to begin recording to the video recorder. The instruction specifies the channel to which the TV is tuned, so that when the video recorder has received the instruction, it can immediately start recording the correct program without the user having to input any information identifying this program into the video recorder.

In case of timer download, the TV is equipped with a functionality such as the so-called EPG (electronic program guide), by which a user can input desired recording start and stop times for the video recorder and channels to be recorded into the TV. By downloading these data to the video recorder, the TV can program the video recorder timer.

For exchanging all this control information by AV-LINK, a protocol referred to as the P50 protocol has been defined. In this protocol, two subaddresses are defined for two video recorders that may simultaneously be connected to one TV. By specifying one of these addresses when sending control information via AV-LINK, the TV can determine which of the two video recorders will take account of this control information. In this way, a single TV can control two video recorders independently from one another, provided, of course, that the TV set supports the complete P50 protocol specification.

The problem is that current TV sets do not support the two addresses defined in the P50 protocol. Even if TV sets supporting two video recorder addresses should be developed in the near future, the problem would remain that none of the millions of TV sets that are currently being used can be operated in a network with two peripheral AV devices.

The object of the present invention is, therefore, to provide an AV device capable of operating in a small network together with a TV set and at least one more peripheral AV device which does not require the TV to support more than one address for the peripheral devices connected to it.

This object is achieved by an AV device having two ports for exchanging AV signals and control information with other AV devices, with a switch placed between said two ports for allowing or preventing transmission of control information from one of said ports to the other port.

The switch of this device may be manually controlled by a user, i.e. by setting the switch the user can decide which of the two peripheral devices of the network is to take account of control information transmitted by the TV set.

According to a preferred embodiment the switch may alternatively or additionally be automatically controlled by a control unit of the device of the invention based on control information received from at least one of the other devices of the network.

Based on the type of control information received from the device connected to one of its ports or on the identity of the port where the control information is received, the control unit of the AV device of the invention is able to judge whether control information received from one of the data processing devices connected to it is intended for itself or for the other data processing device, and to process or not to process the control information accordingly.

Preferably, the control unit is adapted to control the switch according to control information received from both ports.

The control information exchanged via the two ports of the AV data processing device is preferably in the form of individual commands that can be distinguished by the control unit. If the control unit distinguishes such a command in control information received at a first one of said ports, it will automatically close the switch so that further control information is also transmitted to a device connected to the second port. This is particularly appropriate if the device connected to the first port is a VCR and the command is e.g. a request to send the necessary information for emergency recording. This request will thus be forwarded to a TV set connected to the second port which is able to reply to it adequately. If the emergency recording request comes from the VCR (remote control of the VCR), the PVR does not start recording as the PVR has monitored the previous communication and it is aware that the request is coming from the VCR.

On the other hand, if a command such as a program map download command from a TV is distinguished at the second port of the device of the invention, and the switch is open, the device will preferably carry out the command and close the switch in order to enable a VCR connected to the first port also to carry out the command.

The construction described above may also have the following advantage when the two devices are not adapted to communicate with the TV simultaneously : the device according to the invention may be adapted to provoke re-emission of the received command after having closed the switch. This may be achieved by the device of the invention not acknowledging receipt of the command, if the devices of the network are adapted to re-send a command if no acknowledgement is received, or by issuing an explicit request to re-send the command.

When the device of the invention is in an standby state, the switch should preferably be closed, so that it will not prevent communication between other devices connected to it.

The device of the invention is preferably a video cassette recorder or a video disc recorder.

The invention also proposes such a device further comprising a hard disk drive to record data obtained from said AV signals.

The invention will be described more in detail and further advantages will become apparent from the following description of embodiments given with respect to the appended drawings.
- Fig. 1: is a block diagram of a network of AV data processing devices comprising a device according to the present invention;
- Figs. 2, 3, 4: illustrate signalisation procedures between the devices of the network of Fig. 1; and
- Fig. 5: illustrates a second embodiment of a network according to the present invention.

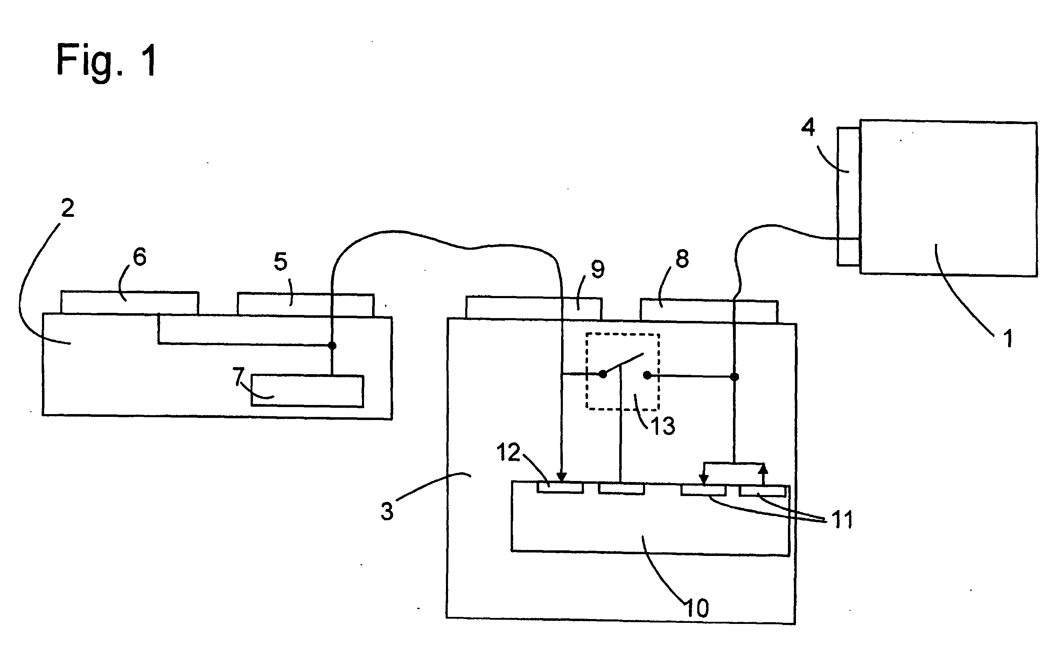

Fig. 1 is a block diagram representing a network of three AV signal processing devices, namely a TV 1, a conventional VCR 2 and a so-called personal video recorder or PVR 3, i.e. a video device comprising a hard disc for data storage, or a DVD recorder according to the present invention.

The TV 1 has a Scart connector 4 for exchanging AV signals and control information with the other devices 2, 3 of the network.

Such a Scart connector has a plurality of pins, part of which are used for exchanging AV signals and one of which, the pin No. 10, is used for serially transmitting commands of various types between the devices of the network.

The VCR 2 has two such Scart connectors 5, 6 which are connected in parallel to a microprocessor 7. The microprocessor 7 controls the operation of the VCR 2 and is designed to communicate with a TV receiver.

In Fig. 1 the connector 6 is represented as unused. In principle, another network device might be connected to it.

The PVR 3 also has two Scart connectors 8, 9, which are in use. This is possible due to the specific internal structure of the PVR 3. The PVR 3 comprises a microprocessor 10 which controls the operation of the PVR,communicates with the TV 1of the network and monitors information received from the VCR 2. It differs from the microprocessor 7 of VCR 2 in that it has not one but two serial interfaces 11, 12, the first interface 11 being connected to the tenth pin of Scart connector 8 for exchanging control information with the TV 1, and the second interface 12 being connected to the tenth pin of Scart connector 9. The first interface 11 is bi-directional for receiving control information from TV 1 and sending control information there, and it is adapted to distinguish the various types of commands that might be received from the TV 1. The second interface 12 might be of the same type as the first interface 11, but preferably, it is simpler in structure and is only for receiving, but not for sending information. It need not even be able to distinguish between various types of commands; for the purposes of the present invention it is quite sufficient that the second interface 12 is able to detect the presence of a command in the signal it receives from the VCR 2.

A switch 13 for connecting the tenth pins of connectors 8, 9 with one another is controlled by the microprocessor 10. In a STANDBY state of the PVR 3, the switch 13 is closed, so that all control information sent the TV 1 will be received by the VCR 2, and vice versa, as if the PVR 3 were not present.

Alternatively, the microprocessor 10 could monitor the signals from the VCR 2 via the first interface 11 (instead of the second interface 12 which is then not needed). In this case, switch 13 is controlled by microprocessor 10 to be closed when monitoring signals from the VCR2.

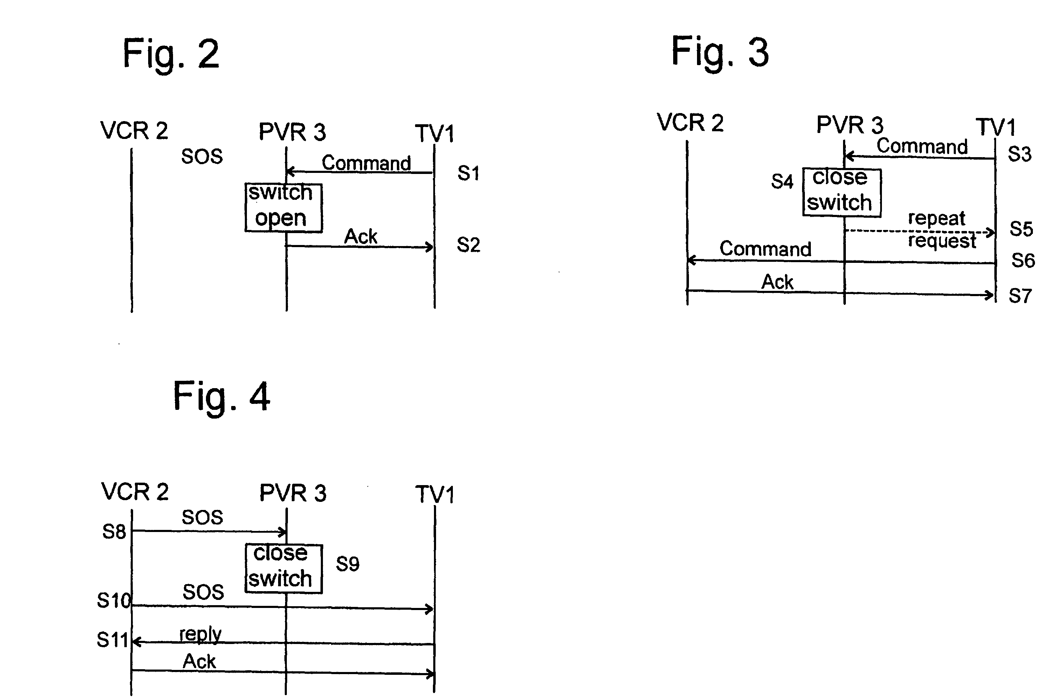

Figs. 2, 3 and 4 show examples of how the exchange of control information between the VCR 2, the PVR 3 and the TV 1 is realized.

The default position of switch 13 is open.

In Fig. 2, it is assumed that a user has pressed an emergency recording button of the TV 1, and thus in a first step S1 the TV 1 outputs an emergency recording command specifying the channel to which the TV 1 is currently tuned. Since the switch 13 is open, the command is not received by the VCR 2, but only by the first interface 11 of PVR 3. The microprocessor 10 recognizes that the received command is an emergency recording command. If such a command is received, the microprocessor 10 keeps the switch 13 open, has an acknowledgment of the command transmitted to the TV 1 and begins to record the program identified in the command on a hard disc of the PVR 3. The VCR 2 remains completely unaware of the dialogue between the PVR 3 and TV 1. Accordingly, if the VCR 2 happens to be in standby and a recorded cassette is inserted in it, the recordings on the cassette are protected from inadvertently being overwritten by the emergency recording.

Another type of command that can be transmitted by the TV 1 is a program map download command. In a command of this type the TV 1 transmits the frequencies to which its various channels are preset, so that later, when emergency recording command or other recording programming data are transmitted, it will only be necessary to transmit the channel number but not the receiving frequency of a program.

The processing of such a command is shown in Fig. 3. In a first step S3, a program map download command issued by the TV 1 is received by the PVR 3. The PVR 3 then registers the frequencies specified in the map download command in its memory, and simultaneously, it closes the switch 13 in step S4. It does not acknowledge receipt of the command to the TV 1. Optionally, in a second step S5 shown as a dashed arrow in Fig. 3, it may send a request to the TV 1 to repeat transmission of the map download command.

In any case, either due to non-receipt of an acknowledgement or due to receipt of the repeat request, the TV will re-send the map download command as indicated in step S6 of Fig. 3. Now, the command is also transmitted to the VCR 2 and is carried out by it. The VCR 2, in a quite conventional manner, will send an acknowledgment in step S7 if the command was received and carried out ok, or, in case of problems, it may also send a repeat request. In this way, in a single operation, the program frequencies stored in the PVR 3 and in the VCR 2 are updated.

Another type of command that may be transmitted by the TV 1 is a programming command. Many TVs provide a user interface such as EPG (electronic program guide) that enables a user to input desired channels, start and stop times of the programs to be recorded into the TV 1. Once the user has input the necessary data, the TV 1 will send a programming command. If the PVR 3 is in standby or in a recording or reproducing state, and, hence, the switch 13 is open, the command is received by the PVR 3 alone, similarly to the situation depicted in Fig. 2. The PVR 3 carries out the command and acknowledges the receipt. The VCR 2 remains unprogrammed. Usually, this will suit the needs of a user, since there is no interest in having two devices recording the same program, and in case of need, a recording can be transferred from PVR 3 to VCR 2 at any later time by recording with the VCR 2 the video sequence reproduced from the PVR 3. However, if a user wishes to program the VCR 2, a menu of the PVR3 allows him to have EPG information transferred to the VCR 2 by having the switch 13 closed, as previously explained for the program map download. In this way, EPG programming is applicable for both the VCR 2 and the PVR 3.

Up to this point, only commands transmitted by the TV 1 have been considered. Let us now consider a command transmitted by the VCR 2, referring to Fig. 4. Such a command might be an emergency recording request issued by the VCR 2 if an emergency recording button of the VCR 2 is pressed by a user. Such a command from the VCR 2 is received by the second interface 12 of the PVR 3 (step S8). When the microprocessor 10 recognizes that a command of any type has been received at the interface 12, for a given period of time, it closes the switch 13 and disables the first interface 11 (step S9). It does not acknowledge the command, so that after a short delay, the VCR2 re-sends it (S10). The re-sent command reaches the TV 1 via the switch 13, now closed. The TV 1 generates a reply specifying the channel to be recorded in step S 11. This reply may be identical to the emergency recording command of step S1 described above. The reply is ignored by the PVR 3, since its first interface 11 is still disabled, and is taken account of by the VCR 2. When the given period of time has elapsed, the switch 13 is re-opened, and the interface 12 is enabled again.

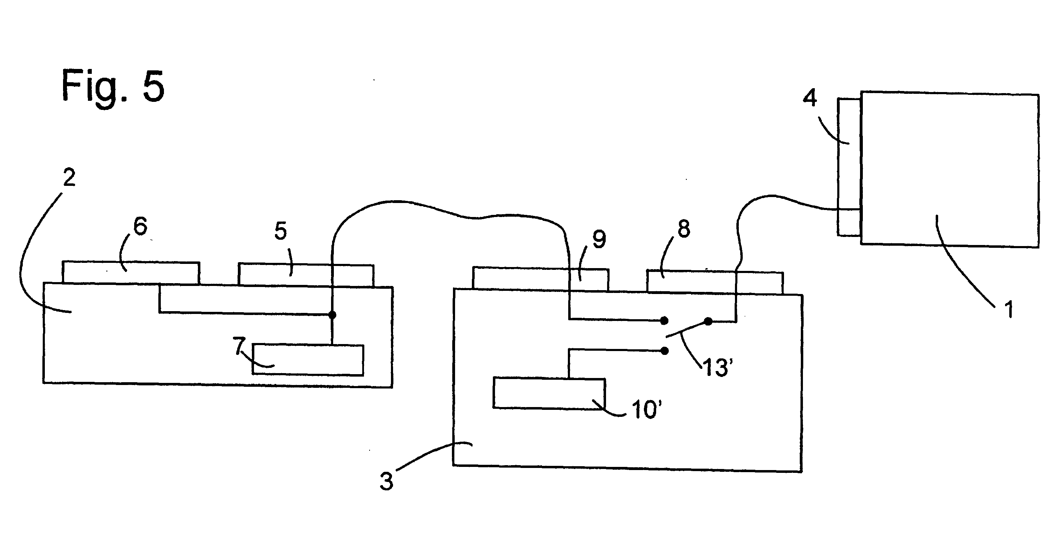

Fig. 5 illustrates a second embodiment of a network according to the present invention. Components such as the TV 1 and the VCR 2 that are identical to those of Fig. 1 have the same reference numerals; modified components are distinguished from their counterparts of Fig. 1 by adding a prime (') to their reference numerals. The switch 13' is exclusively manually controlled and is switchable between a first position and in which it connects the tenth pin of Scart connector 8 to microprocessor 10' of PVR 3' and a second position in which it connects the tenth pins of connectors 8, 9 and leaves the microprocessor 10' disconnected.

In this way, in the first position of the switch, commands are exchanged between the TV 1 and the PVR 3'; and in the second position, between the TV 1 and the VCR 2. In emergency recording command from the TV 1 will thus be executed either by the PVR 3' or the VCR 2, according to the position of the switch 13'. In order to update the PVR 3' and the VCR 2 by a program map command, the command must be transmitted twice, once in each position of the switch 13'.

## Claims

1. An audio/video (AV) device (3, 3') having two ports (8, 9) for exchanging AV signals and control information with other AV devices (1, 2), **characterised by** a switch (13, 13') placed between said two ports (8, 9) for allowing or preventing transmission of control information from one of said ports (8, 9) to the other port.

2. An AV device (3) according to claim 1, further comprising a,control unit (10) for controlling said switch (13) according to a control information received from at least one of said ports (8, 9).

3. An AV device (3) according to claim 2, wherein said control unit (10) controls said switch (13) according to control information received from both ports (8, 9).

4. An AV device (3) according to one of the preceding claims, wherein said control unit (10) is adapted to distinguish individual commands in said control information and, in case the switch (13) is open when a command is distinguished in control information received at a first one of said ports (9), to close the switch (13).

5. An AV device (3) according to one of the preceding claims, wherein the control unit (10) is adapted to distinguish individual commands in said control information and, in case the switch (13) is open when a command is distinguished in control information received at a second one of said ports (8), to decide whether to close or not to close the switch (13) depending on the type of command received.

6. An AV device (3) according to claim 4 or 5, wherein the device is adapted to provoke re-emission of the received command after having closed the switch (13).

7. An AV device (3) according to one of the preceding claims, wherein said two ports (8, 9) each comprise at least one first pin for transmitting AV data and at least one second pin for transmitting control information, and the switch (13) is located in a line connecting said second pins.

8. An AV device (3) according to one of the preceding claims, the AV device being a video cassette recorder a video disc recorder.

9. An AV device (3) according to any of the preceding claims, further comprising a hard disk drive to record data obtained from said AV signals.

## Patentansprüche

1. Audio/Video (AV)-Gerät (3, 3') mit zwei Anschlüssen (8, 9) zum Austausch von AV-Signalen und Steuerinformationen mit anderen AV-Geräten (1, 2),
**gekennzeichnet durch**
einen Schalter (13, 13') zwischen den beiden Anschlüssen (8, 9), um eine Übertragung von Steuerinformationen von einem der Anschlüsse (8, 9) zu dem anderen Anschluss zu ermöglichen oder zu verhindern.

2. AV-Gerät (3) nach Anspruch 1, mit einer Steuereinheit (10) zur Steuerung des Schalters (13) entsprechend den von wenigstens einem der Anschlüsse (8, 9) empfangenen Steuerinformationen.

3. AV-Gerät (3) nach Anspruch 2, wobei die Steuereinheit (10) den Schalter (13) entsprechend den von beiden Anschlüssen (8, 9) empfangenen Steuerinformationen steuert.

4. AV-Gerät (3) nach einem der vorangehenden Ansprüche, wobei die Steuereinheit (10) individuelle Befehle in den Steuerinformationen unterscheidet um in dem Fall, wo der Schalter (13) geöffnet ist, wenn ein Befehl in den Steuerinformationen unterschieden wird, die bei einem ersten der Anschlüsse (9) empfangen werden, den Schalter (13) zu schließen.

5. AV-Gerät (3) nach einem der vorangehenden Ansprüche, wobei die Steuereinheit (10) individuelle Befehle in den Steuerinformationen unterscheidet und in dem Fall, wo der Schalter (13) offen ist, wenn ein Befehl in den Steuerinformationen unterschieden wird, die an einem zweiten Anschluss der Anschlüsse (8) empfangen werden, um zu entscheiden, ob der Schalter (13) geöffnet oder geschlossen wird, abhängig von dem Typ des empfangenen Befehls.

6. AV-Gerät (3) nach Anspruch 4 oder 5, wobei das Gerät eine Rücksendung des empfangenen Befehls, nachdem der Schalter (13) geschlossen worden ist, bewirkt.

7. AV-Gerät (3) nach einem der vorangehenden Ansprüche, wobei die beiden Anschlüsse (8, 9) jeder wenigstens einen ersten Pin für die Übertragung von AV-Daten und wenigstens einen zweiten PIN für die Übertragung von Steuerinformationen enthält und der Schalter (13) in einer die zweiten Pins verbindenden Leitung liegt.

8. AV-Gerät (3) nach einem der vorangehenden Ansprüche, wobei das AV-Gerät ein Videocassettenrecorder oder ein Videoplattenspieler ist.

9. AV-Gerät (3) nach einem der vorangehenden Ansprüche mit einem Festplattenlaufwerk zur Aufzeichnung von aus den AV-Signalen gewonnenen Daten.

## Revendications

1. Dispositif audio/vidéo (AV) (3, 3') possédant deux ports (8, 9) pour échanger des signaux AV et des informations de commande avec d'autres dispositifs AV (1, 2), **caractérisé par** un commutateur (13, 13') placé entre les deux dits ports (8, 9) pour permettre ou empêcher la transmission des informations de commande de l'un desdits ports (8, 9) à l'autre port.

2. Dispositif AV (3) selon la revendication 1, comprenant en outre une unité de commande (10) pour commander ledit commutateur (13) selon une information de commande reçue d'au moins l'un desdits ports (8, 9).

3. Dispositif AV (3) selon la revendication 2, dans lequel ladite unité de commande (10) commande ledit commutateur (13) selon des informations de commande reçues des deux ports (8, 9).

4. Dispositif AV (3) selon l'une des revendications précédentes, dans lequel ladite unité de commande (10) est adaptée pour distinguer des commandes individuelles dans lesdites informations de commande et, au cas où le commutateur (13) serait ouvert lorsqu'une commande est distinguée dans les informations de commande reçues au niveau d'un premier desdits ports (9), pour fermer le commutateur (13).

5. Dispositif AV (3) selon l'une des revendications précédentes, dans lequel l'unité de commande (10) est adaptée pour distinguer des commandes individuelles dans lesdites informations de commande et, au cas où le commutateur (13) serait ouvert lorsqu'une commande est distinguée dans les informations de commande reçues au niveau d'un second desdits ports (8), pour décider de fermer ou de ne pas fermer le commutateur (13) en fonction du type de commande reçue.

6. Dispositif AV (3) selon la revendication 4 ou 5, dans lequel le dispositif est adapté pour provoquer la ré-émission de la commande reçue après avoir fermé le commutateur (13).

7. Dispositif AV (3) selon l'une des revendications précédentes, dans lequel les deux dits ports (8, 9) comportent chacun au moins une première broche pour transmettre des données AV et au moins une seconde, broche pour transmettre des informations de commande, et le commutateur (13) est situé sur un câble connectant lesdites secondes broches.

8. Dispositif AV (3) selon l'une des revendications précédentes, le dispositif AV étant un magnétoscope ou un enregistreur sur disque vidéo.

9. Dispositif AV (3) selon une revendication quelconque parmi les revendications précédentes, comprenant en outre un lecteur de disque dur pour enregistrer des données obtenues à partir desdits signaux AV.
